# EUROPEAN PATENT SPECIFICATION

(11) **EP 0 728 699 B1**
(45) Date of publication and mention of the grant of the patent: **06.05.1999**
(21) Application number: 95304277.7
(22) Date of filing: 20.06.1995
(51) Int. Cl.: C01B 39/08

(54) **Fibrous zeolites and preparation method thereof**
Faserige Zeolithe und Verfahren zu ihrer Herstellung
Zéolithes fibreuses et méthode pour leur préparation

(30) Priority: 24.02.1995 KR 9503642
(43) Date of publication of application: 28.08.1996
(73) Proprietor: Daelim Engineering Co. Ltd., Seoul (KR)
(72) Inventor: Shul, Yong-gun, Seodaemun-gu, Seoul (KR); Lee, Cheon-hee, Seodaemun-gu, Seoul (KR); Gil, Young-chul, Yangcheon-gu, Seoul (KR); Kim, Du-soung, Kangseo-gu, Seoul (KR)
(74) Representative: Stanley, David William

(56) References cited:
- EP-A- 0 183 391
- EP-A- 0 292 363
- EP-A- 0 372 133
- DE-A- 3 416 545

## Description

### Background of the Invention

The present invention relates to a fibrous zeolite and a preparation method thereof, and more particularly, but not exclusively, to a fibrous zeolite which is easy to use as a functional material, can be easily adsorbed and desorbed when used as a catalyst, and can be directly used as a reinforcement material.

Scientific and industrial research into zeolites has been very active in the catalyst field since the discovery of stilbite, a natural zeolite. Currently, 34 kinds of natural zeolites are known. However industrial uses of natural zeolites are encumbered due to the limited pore sizes, crystalline structures and purity levels of available zeolites. Therefore, at present, powdered zeolites are synthesized. Such synthetic zeolites are widely used as detergents, catalysts, adsorbents and moisture absorbents.

Natural or synthetic powdered zeolites can be used as catalysts in conversion reactions for many kinds of hydrocarbons. Due to their uniform pore structure, powdered zeolites are able to selectively adsorb molecules which have an appropriate form and size and they may thus be used as molecular sieves.

Synthetic powdered zeolites may be prepared using various methods of synthesis. Synthetic zeolites with variable ratios of SiO₂/Al₂O₃ as the main components include zeolite X (U.S. Patent 2,882,244), zeolite Y (U.S. Patent 3,130,007), and ZSM-5 (U.S. Patent 3,702,886).

U.S. Patent 4,410,501 discloses a titanium-silicalite synthetic zeolite (hereinafter, referred to as TS-1) which substitutes titanium oxide for aluminum oxide in conventional zeolites composed of aluminum oxide and silicon oxide. TS-1 is also referred to in European Patent Application Nos.267,362 and 190,609.

Most synthetic zeolites are prepared by hydrothermal synthesis at a high temperature (130-200°C) and under high pressure (20-80 atmospheres). The synthetic zeolite thus prepared is in a powder form having a particle size ranging from 0.1µm to several µm.

Conventional zeolites are difficult to use directly in their powder form, and therefore several methods for using conventional powdered zeolites have been sought. In one such method, the powdered zeolite is blended with another inactive ingredient such as alumina and made into a pellet for use as an adsorbent in packed columns. In this case, however, it is difficult to fully utilise the adsorption surface because reactant diffusion rates are reduced when pressure differences in packed columns increase excessively.

Recently, a preparation of a zeolite film for use as an effective separating membrane was disclosed. In the method, a thin layer of zeolite is formed on a support such as Teflon, filter paper or stainless steel by using a hydrothermal method [Sano et al, J. Mater. Chem., 2, 141 (1992)]. A zeolite film with only a few surface faults such as pinholes or cracks is still under study.

A method for mixing a crystalline zeolite with a polyamide fiber and then spinning the mixture to produce a textile form of zeolite is disclosed in Japanese Patent Laid-Open Publication No. Hei 4-333,639. In addition, a method for coating a zeolite onto a ceramic fiber is disclosed in Japanese Patent Laid-Open Publication No. Hei 5-131,139. However, this method is difficult to apply due to its complexity.

As described above, there are problems in utilizing powdered zeolite due to the complex problems encountered in attempting to bring it into an effective form.

### Summary of the Invention

An object of the present invention is to provide a fibrous zeolite which overcomes these problems.

Another object of the present invention is to provide a method of preparation of such a fibrous zeolite.

According to a first aspect of the present invention, there is provided a fibrous zeolite comprising an oxide of silicon and an oxide of titanium.

Preferably, the zeolite comprises silicon dioxide and titanium dioxide in accordance with the following formula:-

xTiO₂·(1-y)SiO₂

Typically, x ≙ y and both are in the range 0.02-0.1.

According to a second aspect of the present invention, there is provided a method of preparation of a fibrous zeolite comprising the steps of:
(i)
   (a) preparing at least one silicon oxide source;
   (b) preparing a hydrolysable titanium source;
   (c) adding the hydrolysable titanium source obtained in step (b) to the product of step (a);
   (d) adding a solvent to the mixture obtained in step (c);
   (e) obtaining a zeolite crystal from the mixture obtained in step (d);
(ii) separating the zeolite crystal; and
(iii) dispersing the zeolite crystal obtained in step (ii) into a solvent and evaporating the solvent to form a fibrous zeolite.

Preferably, the solvent in both cases is water and the hydrolysable titanium compound is diluted in step (b) with a diluent such as isopropyl alcohol which is then removed from the mixture after step (c).

In the preferred embodiment, the silicon oxide source is selected from the group consisting of tetraethylorthosilicate and silica gel. Preferably, the silicon oxide source is mixed with at least one organic base prior to slowly mixing with the diluted hydrolysable titanium compound. The organic base is preferably selected from the group consisting of: tetramethylammonium hydroxide, tetraethylammonium hydroxide, tetrabutylammonium hydroxide, tetrapropylammonium bromide, pyrrolidine, propylamine, dipropylamine and tripropylamine. The diluent is typically isopropyl alcohol and is added to preferably give a final concentration of hydrolysable titanium compond of 15 to 25% by weight in step (b). The amount of diluted product obtained in step (b) added to the mixture obtained in step (a) is typically that which allows the molar ratio of the titanium compound and the silicon oxide source to reach 1:50-1:10. The diluent, isopropyl alcohol, may be removed after step (c) by heating the mixture to eliminate the alcohol. The amount of water solvent added in step (d) is preferably 15 to 50 moles per one mole of the silicon oxide source contained in the mixture. The zeolite crystal may be obtained in step (e) by maintaining the mixture obtained in step (d) at a temperature range of 60-100^{o}C, under atmospheric pressure to give a mother liquor containing the said zeolite crystal. The zeolite crystal may be separated from the mixture by centrifuging the mother liquor obtained in step (i). Preferably, in step (iii), the zeolite crystal obtained in step (ii) is dispersed into water in a final concentration of 0.5-2% by weight.

In addition, the zeolite crystal is preferably formed by adding 100-400% by weight of water (based on the weight of the mother liquor obtained in step (i)) just prior to the step of centrifuging the mother liquor. Thus, in accordance with the present invention, a zeolite may be taken from the powdered form and converted into a fibrous form. Advantageously, unlike conventional hydrothermal synthesis at a high temperature and under high pressure, a fibrous zeolite is obtained by synthesising the zeolite crystal, preferably having a predetermined particle size, at a low temperature and, typically, under atmospheric pressure.

Typically, the zeolite crystal for formation into the fibrous form has a particle size of less than 150nm and preferably less than 120nm.

The temperature range for obtaining the particle size of less than 150nm under atmospheric pressure is typically 60-100^{o}C. At temperatures below 60^{o}C it takes a long time to obtain a zeolite crystal and the zeolite crystal is only rarely formed into the fibrous form at a temperature over 100^{o}C due to the particle size under such conditions exceeding 150nm.

The zeolite crystal is preferably dispersed into water in the final concentration of 0.5-2wt% in order to transform a zeolite having a particle size of less than 150nm into the fibrous form.

Finally, the zeolite crystal dispersed in water is preferably dried at about 100^{o}C to form the fibrous zeolite composed of silicon oxide and titanium oxide.

Preferably, a hydrolysable titanium compound, such as titaniuum butoxide, titanium ethoxide, titanium isopropoxide, titanium tetrachloride, titanium oxychloride etc, is used as the titanium oxide source.

Advantageously, the organic base to be mixed with the silicon oxide source dissolves the silicon oxide source from the gel state to facilitate the reaction with the titanium oxide source. Furthermore, as the growth of the zeolite crystal is hindered at high pH level, an organic base may be added to the silicon oxide source in a molar ratio of 10:1-10:8.

### Brief Description of the Drawings

Embodiments of the present invention will now be described, by way of example, with reference to the attached drawings in which:
FIG. 1 is a graph representing a variation in particle size over timeduring formation of zeolite crystal particles according to an embodiment of the present invention;
FIG. 2A and FIG. 2B are photographs showing X-ray diffraction patterns of a zeolite according to an embodiment of the present invention;
FIG. 3 is a graph representing a variation in crystallinity over time during formation of a zeolite crystal particle according to an embodiment of the present invention;
FIG. 4A and FIG. 4B are optical microphotographs (20×) of fibrous zeolites formed according to embodiments of the present invention; and
FIG. 5A and FIG. 5B are FT-IR spectra of fibrous zeolites according to an embodiment of the present invention.

### Detailed Description of the Invention

Hereinafter, the preparation process will be explained with the following examples and comparative examples, but the invention is not limited thereto.

### Example 1

### 1) Preparation of a zeolite crystal

90g of tetraethylorthosilicate (TEOS) and 154g of 20% aqueous tetrapropylammonium hydroxide (TPAOH) solution were mixed by agitation. In a separate vessel, 4.4g of titanium butoxide was diluted with 20g of isopropyl alcohol, and then the diluted solution was slowly dropped into the mixture of tetraethyl orthosilicate and tetrapropylammonium hydroxide. Thereafter, the reaction mixture was heated to a temperature of about 80°C to eliminate the alcohol. 156g of water was then added to the reaction mixture. The reaction mixture (RM) had a composition in terms of its molar ratios as follows;
Ti/Si = 0.03
H₂O/Si = 20
TPAOH/Si = 0.35.

While maintaining atmospheric pressure and a temperature of 80°C, to allow the reaction mixture to react, the mother liquor, a solution containing particles grown after terminating the reaction, was sampled over time to measure the size of the particles according to the DLS (Dynamic Light Scattering) method.

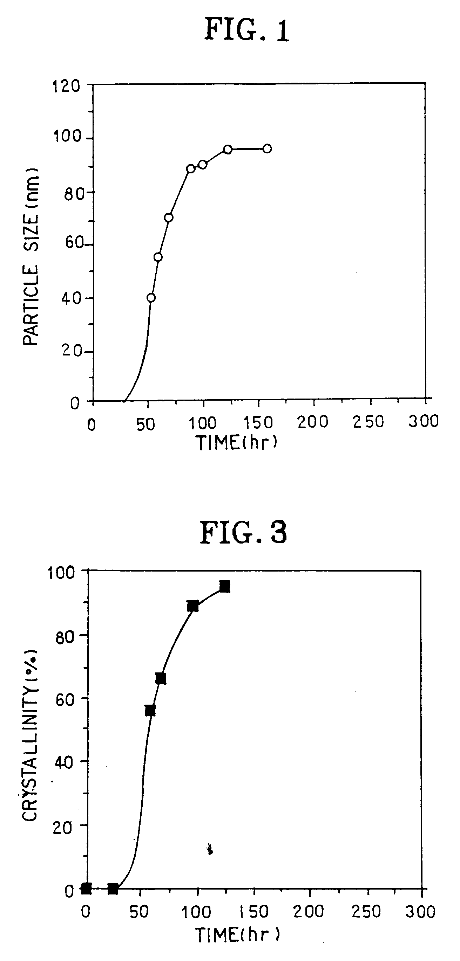

FIG. 1 is a graph representing the growth of the zeolite crystal particles over time. Referring to FIG. 1, particles having sizes of about 10nm formed after 36 hours and particles having a size of 100nm formed after 120 hours. The size of the particles was not found to increase after 120 hours.

The crystallizability of the zeolite particle was determined by the diffraction pattern obtained through an X-ray diffraction analyser (D/MAX, Rikagu) and the crystallinity thereof was obtained by calculating the diffraction pattern area based on the final product when crystallization was complete.

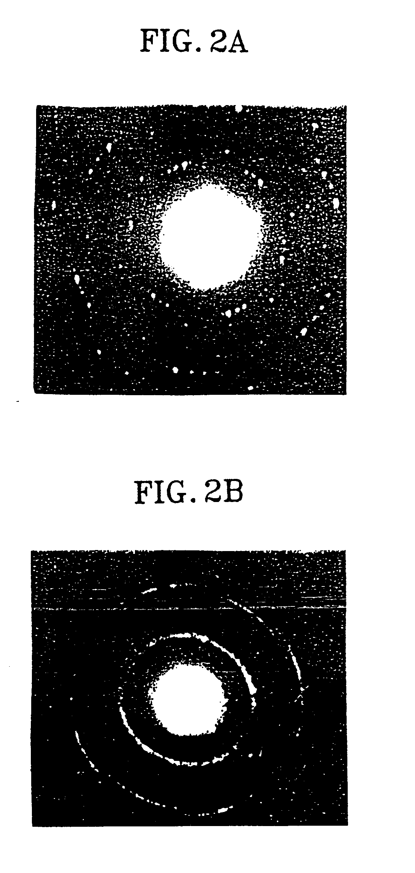

FIG. 2A and 2B are photographs of X-ray diffraction patterns taken after 60 hours (FIG. 2A) and 120 hours (FIG. 2B) respectively, in order to determine the crystallinity of the resultant particles. As shown in the photographs, the zeolite particle presented enough crystallinity after 60 hours, and was almost fully crystallized after 120 hours.

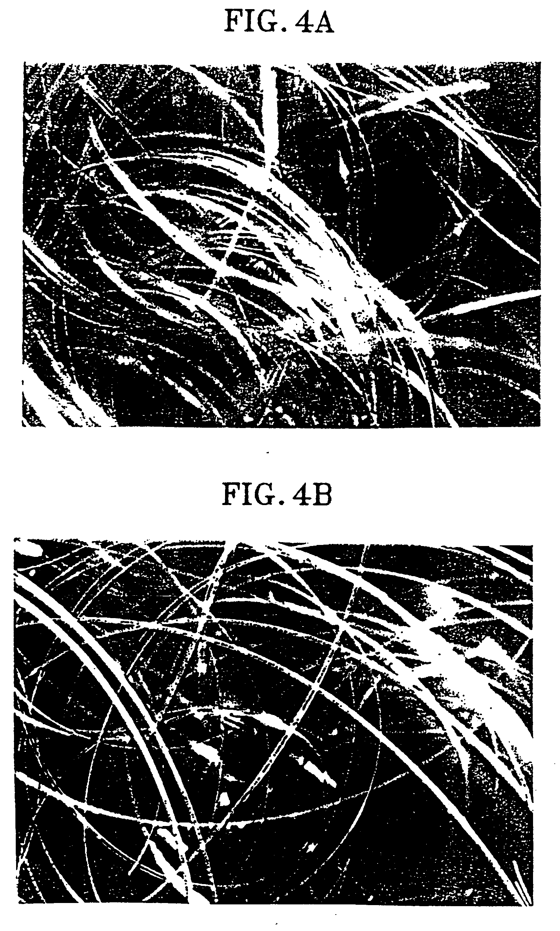

FIG. 3 is a graph representing the crystallinity calculated based on the photographs of the X-ray diffraction patterns. As shown in the graph, crystallization progressed rapidly after 50 hours.

### 2) Formation of the Fibrous Zeolite

The RM obtained in the step of the preparation of a zeolite crystal was reacted for 70 hours to obtain the mother liquor. 300g of water was added to the mother liquor, which was then centrifuged to separate out crystal particles. The crystal particles were then dispersed in water in the concentration of 0.5wt%. The dispersed solution was dried for 10 hours at 100°C and an optical microphotograph was taken of the resultant compound.

FIG. 4A is an optical microphotograph of the zeolite in its fibrous form having a size of about 10-50mm.

### 3) Heat Treatment

A portion of the fibrous zeolite obtained was heated at the rate of 10°C/min., up to 600°C, at which temperature it was maintained for 5 hours. Cracking or breaking down of the fibrous structure of the zeolite did not occur.

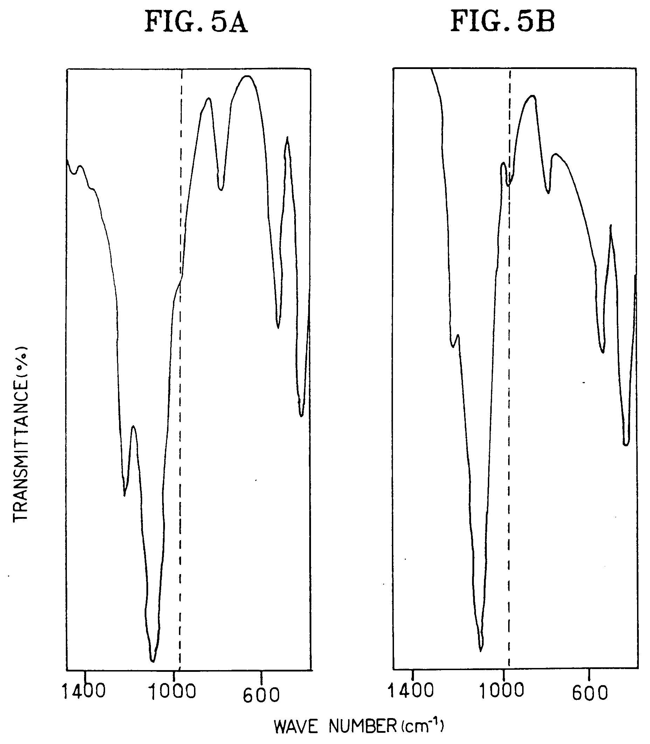

The heat-treated fibrous zeolite and the untreated fibrous zeolite were then subjected to FT-IR spectrum analysis. FIG. 5A is the spectrum of the zeolite which was not heat-treated and FIG. 5B is the spectrum of the heat-treated zeolite. As shown in the spectra, a characteristic peak attributed to the Si-O-Ti bond appears in the vicinity of 970cm⁻¹. In the FT-IR spectrum of the heat-treated fibrous zeolite, the relative intensity at each wave number is as follows:

**Table 1**

| wave number | relative intensity |
|---|---|
| 1220 - 1230 | w |
| 1080 - 1110 | ms |
| 965 - 975 | w |
| 795 - 805 | mw |
| 550 - 560 | m |
| 450 - 470 | ms |

| | |
|---|---|
| * the relatives (s=strong, ms=medium-strong, m=medium, mw= medium-weak, w=weak). | |

### Example 2

Example 1 was repeated to obtain zeolite crystal particles. The obtained crystal particles were dispersed in water in the concentration of 2wt%, dried and analysed according to the same method as described in Example 1. Analysis results showed that the zeolite crystal formed into the fibrous form as shown in FIG. 4B, though it was inferior in measured characteristics when compared with a fibrous zeolite obtained from Example 1.

### Example 3-4

Example 1 was repeated twice more using 5.9g and 14.7g of titanium butoxide (Ti/Si molar ratios of 0.04 and 0.1, respectively) to ascertain whether the fibrous zeolite formed or not. An optical microphotograph of each compound showed the formation of the fibrous zeolite.

### Comparative Example 1

90g of tetraethyl orthosilicate and 439g of 20% aqueous tetrapropylammonium hydroxide (TPAOH/Si = 1.0) solution were mixed by agitation. In a separate vessel, 2.9g of titanium butoxide (Ti/Si = 0.02) was diluted with 60g of isopropyl alcohol, and the diluted solution was then slowly dropped into the reaction mixture. Thereafter, the reaction mixture was heated to the temperature of about 85°C to eliminate the alcohol. 234g of water was then added to the reaction mixture. The reaction mixture was reacted for 100 hours under atmospheric pressure and at a temperature of 80°C to form the crystal particles.

The mother liquor containing the crystal particles was centrifuged to separate the crystal particles. The size of the crystal particles contained in the mother liquor was confirmed to be 100nm by the DLS method. The obtained crystal particles were dispersed in water in the concentration of 50 wt%, and then dried and analysed according to the same method as described in Example 1. Analysis results showed that the zeolite crystal did not form the fibrous zeolite.

### Comparative Example 2

90g of tetraethyl orthosilicate and 439g of 20% aqueous tetrapropylammonium hydroxide (TPAOH/Si = 1.0) solution were mixed by agitation. In a separate vessel, 2.9g of titanium butoxide (Ti/Si = 0.02) were diluted with 60g of isopropyl alcohol, and the diluted solution was then slowly dropped into the reaction mixture. Thereafter, the reaction mixture was heated to the temperature of about 85°C to eliminate the alcohol. 234g of water was then added to the reaction mixture. The reaction mixture was reacted for 100 hours under atmospheric pressure and at a temperature of 80°C to form the crystal particles.

1,000g of water was added to the mother liquor containing the crystal particles and thereafter the mother liquor was centrifuged to separate the crystal particles. The size of the crystal particles contained in the mother liquor was confirmed to be 100nm by the DLS method. The obtained crystal particles were dispersed in water in the concentration of 50 wt%, and then dried and analysed according to the same method as described in Example 1. Analysis results showed that the zeolite crystal did not form fibrous zeolite.

### Comparative Example 3

90g of tetraethyl orthosilicate and 220g of 20% aqueous tetrapropylammonium hydroxide (TPAOH/Si = 0.5) solution were mixed by agitation. In a separate vessel, 4.4g of titanium butoxide (Ti/Si = 0.03) was diluted with 60g of isopropyl alcohol, and the diluted solution was then slowly dropped into the reaction mixture. Thereafter, the reaction mixture was heated to the temperature of about 85°C to eliminate the alcohol. 1,300g of water was then added to the mixture. The mixture was reacted for 90 hours under atmospheric pressure and at a temperature of 150°C to form crystal particles, 150nm in size.

Without performing the separation process for the crystal particles, the mother liquor was then dried for 6 hours at a temperature of 150°C. The zeolite crystal did not form fibrous zeolite.

### Comparative Example 4

90g of tetraethyl orthosilicate and 220g of 20% aqueous tetrapropylammonium hydroxide (TPAOH/Si = 0.5) solution were mixed by agitation. In a separate vessel, 4.4g of titanium butoxide (Ti/Si = 0.03) were diluted with 60g of isopropyl alcohol, and then the diluted solution is slowly dropped into the reaction mixture. Thereafter, the reaction mixture is heated to the temperature of about 85°C to eliminate the alcohol. 234g of water was then added to the reaction mixture. The reaction mixture was placed in an autoclave and reacted at 150°C to obtain a mother liquor containing particles, 120nm in size.

The mother liquor was centrifuged to separate the crystal particles. The crystal particles were dispersed in water in the concentration of 10wt%, and then dried and analysed according to the same method in Example 1. Analysis results showed that the zeolite crystal did not form fibrous zeolite.

### Comparative Example 5

An existing ZCR-Z-Y 5.6 zeolite particle having a size of 1,000nm (1µm) was dispersed in water in the concentration of 10wt%, and then dried and analysed according to the same method in Example 1. Analysis results showed that the fibrous zeolite was not formed.

As described above, the fibrous zeolite formed by using zeolite crystals less than 150nm in size according to the present invention is easy to use as a functional material, is easily adsorbed and desorbed when used as a catalyst, and can be directly used as a reinforcement material because of its fibrous form.

That is, unlike the conventional zeolite which requires a support when it is used as a catalyst, the fibrous zeolite of the present invention does not require a support and can be applied by itself.

**Table 2**

| | | reaction condition¹ | | | reaction temp.(°C) | particle size(nm) | reformation | | | fibrous growth |
|---|---|---|---|---|---|---|---|---|---|---|
| | | Ti/Si | H2O/Si | TPAOH/Si | | | density² | condition for drying | | |
| | | | | | | | | temp(°C) | time(hr) | |
| example | 1 | 0.03 | 20 | 0.35 | 80 | 60 | 0.5 | 100 | 10 | O |
| | 2 | 0.03 | 20 | 0.35 | 80 | 60 | 2.0 | 100 | 10 | O |
| | 3 | 0.04 | 20 | 0.35 | 80 | 120 | 0.5 | 100 | 10 | O |
| | 4 | 0.1 | 20 | 0.35 | 80 | 110 | 0.5 | 100 | 10 | O |
| comp. example | 1 | 0.02 | 30 | 1.0 | 80 | 100 | 50 | 100 | 10 | X |
| | 2 | 0.02 | 30 | 1.0 | 80 | 100 | 50 | 100 | 10 | X |
| | 3 | 0.03 | 30 | 0.5 | 150 | 150 | - | 150 | 5 | X |
| | 4 | 0.03 | 30 | 0.5 | 150 | 120 | 10 | 100 | 10 | X |
| | 5 | - | - | - | - | 1,000 | 10 | 100 | 10 | X |
| O : fibrous zeolite is formed. X : fibrous zeolite is not formed. | | | | | | | | | | |

| | | | | | | | | | | |
|---|---|---|---|---|---|---|---|---|---|---|
| ¹ : reaction condition is based on the molar ratio. | | | | | | | | | | |
| ² : density of particles is represented by weight % based on the weight of water. | | | | | | | | | | |

In this manner, if the zeolite is directly used as a catalyst without using support, it is easy to adsorb and desorb, thereby showing a highly reactive activity. Additionally, the fibrous zeolite of the present invention can be directly manufactured in a mesh for enhancing the ease by which a reactant diffuses onto the catalyst surface.

Furthermore, as the zeolite of the present invention is obtained in a fibrous form, it is capable of being spun as other fibres and it may be manufactured into diverse forms according to the desired use.

## Claims

1. A fibrous zeolite comprising an oxide of silicon and an oxide of titanium.

2. A fibrous zeolite as claimed in claim 1, wherein the zeolite comprises silicon dioxide and titanium dioxide in accordance with the following formula:-
xTiO₂·(1-y)SiO₂,
wherein x ≙ y and both are in the range 0.02-0.1.

3. A method of preparation of a fibrous zeolite comprising the steps of:
(i)
(a) preparing at least one silicon oxide source;
(b) preparing a hydrolysable titanium source;
(c) adding the hydrolysable titanium source obtained in step (b) to the product of step (a) and removing any diluent;
(d) adding water to the mixture obtained in step (c);
(e) obtaining a zeolite crystal from the mixture obtained in step (d);
(ii) separating the zeolite crystal; and
(iii) dispersing the zeolite crystal obtained in step (ii) into water and evaporating the water to form a fibrous zeolite.

4. A method as claimed in claim 3, wherein the hydrolysable titanium compound is diluted in step (b) with a diluent such as isopropyl alcohol which is then removed from the mixture after step (c).

5. A method as claimed in any of claims 3 or 4, wherein the silicon oxide source is mixed with at least one organic base prior to slowly mixing with the diluted hydrolysable titanium source.

6. A method as claimed in any of claims 3 to 5, wherein the amount of water solvent added in step (d) is between 15 to 50 moles per one mole of the silicon oxide source contained in the mixture.

7. A method as claimed in any of claims 3 to 6, wherein the zeolite crystal may be obtained in step (e) by maintaining the mixture obtained in step (d) at a temperature range of 60-100^{o}C, under atmospheric pressure to give a mother liquor containing the said zeolite crystal.

8. A method as claimed in any of claims 3 to 7, wherein in step (iii), the zeolite crystal obtained in step (ii) is dispersed into water in a final concentration of 0.5-2% by weight.

9. A method as claimed in any of claims 7 or 8, wherein the zeolite crystal is formed by adding 100-400% by weight of water (based on the weight of the mother liquor obtained in step (i)) just prior to the step of centrifuging the mother liquor.

10. A method as claimed in any of claims 3 to 9, wherein the zeolite crystal for formation into the fibrous form has a particle size of less than 150nm

## Patentansprüche

1. Faser-Zeolith, umfassend ein Siliciumoxid und ein Titanoxid.

2. Faser-Zeolith nach Anspruch 1, wobei der Zeolith Siliciumdioxid und Titandioxid gemäß folgender Formel umfaßt:
xTiO₂·(1-y)SiO_{2,}
in der x ≙ y und beide im Bereich von 0,02-0,1 liegen.

3. Verfahren zur Herstellung eines Faser-Zeoliths, das folgende Schritte umfaßt:
(i)
(a) Herstellen wenigstens einer Siliciumoxidquelle,
(b) Herstellen einer hydrolysierbaren Titanquelle,
(c) Zugabe der in Schritt (b) erhaltenen hydrolysierbaren Titanquelle zum Produkt von Schritt (a) und Entfernen jeglichen Verdünnungsmittels,
(d) Zugabe von Wasser zu dem in Schritt (c) erhaltenen Gemisch,
(e) Erhalten eines Zeolithkristalls aus dem in Schritt (d) erhaltenen Gemisch,
(ii) Abtrennen des Zeolithkristalls, und
(iii) Dispergieren des in Schritt (ii) erhaltenen Zeolithkristalls in Wasser und Verdampfen des Wassers, wodurch ein Faser-Zeolith gebildet wird.

4. Verfahren nach Anspruch 3, bei dem die hydrolysierbare Titanverbindung in Schritt (b) mit einem Verdünnungsmittel, wie z. B. Isopropylalkohol, verdünnt wird, das dann nach dem Schritt (c) aus dem Gemisch entfernt wird.

5. Verfahren nach einem der Ansprüche 3 oder 4, bei dem die Siliciumoxidquelle mit mindestens einer organischen Base vermischt wird, bevor sie langsam mit der verdünnten, hydrolysierbaren Titanquelle vermischt wird.

6. Verfahren nach einem der Ansprüche 3 bis 5, bei dem die in Schritt (d) zugegebene Menge an Wasser-Lösungsmittel zwischen 15 bis 50 Mol pro Mol der in dem Gemisch enthaltenen Siliciumoxidquelle beträgt.

7. Verfahren nach einem der Ansprüche 3 bis 6, bei dem der Zeolithkristall in Schritt (e) dadurch erhalten werden kann, daß das in Schritt (d) erhaltene Gemisch in einem Temperaturbereich von 60-100°C unter atmosphärischem Druck gehalten wird, um eine den Zeolithkristall enthaltende Mutterlösung zu erhalten.

8. Verfahren nach einem der Ansprüche 3 bis 7, bei dem der in Schritt (ii) erhaltene Zeolithkristall in Schritt (iii) in Wasser in einer Endkonzentration von 0,5-2 Gewichtsprozent dispergiert wird.

9. Verfahren nach einem der Ansprüche 7 oder 8, bei dem der Zeolithkristall durch Zugabe von 100-400 Gewichtsprozent Wasser (auf das Gewicht der in Schritt (i) erhaltenen Mutterlauge bezogen) unmittelbar vor dem Schritt des Zentrifugierens der Mutterlauge gebildet wird.

10. Verfahren nach einem der Ansprüche 3 bis 9, bei dem der in faseriger Form zu bildende Zeolithkristall eine Teilchengröße von weniger als 150 nm aufweist.

## Revendications

1. Zéolithe fibreuse comprenant un oxyde de silicium et un oxyde de titane.

2. Zéolithe fibreuse selon la revendication 1, dans laquelle la zéolithe comprend du dioxyde de silicium et du dioxyde de titane conformément à la formule suivante :
xTiO₂· (1-y)SiO₂,
dans laquelle x ≅ y et tous deux sont compris dans la plage de 0,02 à 0,1.

3. Procédé de préparation d'une zéolithe fibreuse, comprenant les étapes consistant à :
(i)
(a) préparer au moins une source d'oxyde de silicium ;
(b) préparer une source de titane hydrolysable ;
(c) ajouter la source de titane hydrolysable obtenue à l'étape (b) au produit de l'étape (a) et éliminer tout diluant ;
(d) ajouter de l'eau au mélange obtenu à l'étape (c) ;
(e) obtenir un cristal zéolithique à partir du mélange obtenu à l'étape (d) ;
(ii) séparer le cristal zéolithique ; et
(iii) disperser le cristal zéolithique obtenu à l'étape (ii) dans l'eau et évaporer l'eau pour former une zéolithe fibreuse.

4. Procédé selon la revendication 3, dans lequel le composé de titane hydrolysable est dilué à l'étape (b) au moyen d'un diluant tel que de l'alcool isopropylique qui est ensuite éliminé du mélange après l'étape (c).

5. Procédé selon l'une quelconque des revendications 3 ou 4, dans lequel la source d'oxyde de silicium est mélangée à au moins une base organique avant d'être mélangée lentement à la source de titane hydrolysable diluée.

6. Procédé selon l'une quelconque des revendications 3 à 5, dans lequel la quantité de solvant aqueux ajoutée à l'étape (d) est comprise entre 15 et 50 moles pour une mole de la source d'oxyde de silicium contenue dans le mélange.

7. Procédé selon l'une quelconque des revendications 3 à 6, dans lequel le cristal Zéolithique peut être obtenu à l'étape (e) en maintenant le mélange obtenu à l'étape (d) dans une plage de températures allant de 60 à 100°C, sous pression atmosphérique afin de donner une liqueur mère contenant ledit cristal zéolithique.

8. Procédé selon l'une quelconque des revendications 3 à 7, dans lequel, à l'étape (iii), le cristal zéolithique obtenu à l'étape (ii) est dispersé dans l'eau avec une concentration finale de 0,5 à 2 % en poids.

9. Procédé selon l'une quelconque des revendications 7 ou 8, dans lequel le cristal zéolithique est formé en ajoutant 100 à 400 % en poids d'eau (rapporté au poids de l'eau mère obtenue à l'étape (i)) juste avant l'étape de centrifugation de la liqueur mère.

10. Procédé selon l'une quelconque des revendications 3 à 9, dans lequel le cristal zéolithique auquel on doit donner une forme fibreuse a une taille de particule inférieure à 150 nm.
